# EUROPEAN PATENT SPECIFICATION

(11) **EP 4 307 443 B1**
(45) Date of publication and mention of the grant of the patent: **09.12.2026**
(21) Application number: 22770234.7
(22) Date of filing: 10.02.2022
(51) Int. Cl.: H01M 50/105, H01M 10/42, H01M 10/48, H01M 50/14, H01M 50/211, H01M 50/284, H01M 50/342, H01M 50/55

(54) **ELECTROCHEMICAL DEVICE, BATTERY PACK, AND POWER CONSUMPTION DEVICE**
ELEKTROCHEMISCHE VORRICHTUNG, BATTERIEPACK UND STROMVERBRAUCHSVORRICHTUNG
DISPOSITIF ÉLECTROCHIMIQUE, BLOC-BATTERIE ET DISPOSITIF DE CONSOMMATION D'ÉNERGIE

(30) Priority: 17.03.2021 CN 202110288102; 29.03.2021 CN 202120635119 U
(43) Date of publication of application: 17.01.2024
(73) Proprietor: NINGDE AMPEREX TECHNOLOGY LIMITED, Ningde City, Fujian Province 352100 (CN)
(72) Inventor: WU, Hao, Dongguan, Guangdong 523000 (CN); WANG, Xionghua, Dongguan, Guangdong 523000 (CN)
(74) Representative: Icosa
(86) International application number: PCT/CN2022/075902
(87) International publication number: WO 2022/193879

(56) References cited:
- CN-A- 101 800 332
- CN-A- 111 509 286
- CN-A- 112 886 106
- CN-U- 207 896 146
- CN-U- 207 896 146
- CN-U- 208 226 003
- CN-U- 215 070 149
- JP-A- 2004 134 115
- US-A1- 2006 019 156
- US-A1- 2007 184 341
- US-A1- 2007 207 377
- US-A1- 2013 149 600
- US-A1- 2019 131 594
- US-A1- 2020 358 053

## Description

### TECHNICAL FIELD

This application relates to the field of battery manufacturing, and in particular, to an electrochemical device, a battery pack, and an electrical device.

### BACKGROUND

Pouch-type lithium-ion batteries are applied more extensively in the fields such as electric vehicles by virtue of the advantages such as a high energy density and high adaptability.

A battery cell of a pouch-type lithium-ion battery is packaged in an aluminum laminated film. Unlike a steel-shell or aluminum-shell cell, a battery cell with an aluminum laminated film provides a relatively large space for deformation, and therefore, is not prone to explosion in a case of thermal runaway. In addition, the pouch-type lithium-ion batteries have the advantages of a light weight and a larger capacity with the same size. However, due to the low strength of the aluminum laminated film, the batteries incur some risks in subsequent assembling and use processes. For example, the battery cell is inferior in anti-drop performance, and the aluminum laminated film is prone to be damaged by impact and incur safety hazards such as electrolyte leakage.

US 2013/0149600 A1 discloses a pouch-type battery pack having an integrally formed insulator with slit parts and a lead cover for covering the pouch and electrode leads to improve insulation, safety, and assembly productivity.

US 2006/0019156 A1 discloses a pouch-type lithium secondary battery in which insulating tape, short-circuit prevention tape, and polymer coating around folded electrode tabs prevent short circuits between the tabs and the metal layer of the pouch case.

JP2004-134115A discloses a laminated battery in which a sealing member covers the laminate sheet end from which the tab is drawn out and part of the tab, thereby improving long-term sealing performance and preventing moisture ingress/electrolyte leakage.

US 2020/0358053 A1 discloses a compact battery pack with stacked pouch cells whose cell tabs are arranged in two columns on a common tab side, with a circuit board positioned in the intermediate zone between the tab columns and electrically connected to the cell tabs.

US 2019/0131594 A1 discloses a battery in which a cover member surrounds part of the outermost region of an electrode assembly and is fixed to the pouch exterior material, with air gaps allowing electrolyte impregnation while suppressing movement of the electrode assembly under shock.

It is therefore the object of the present invention to provide an improved electrochemical device.

### SUMMARY

This application provides an electrochemical device, a battery pack, and an electrical device to alleviate the problem of inferior mechanical properties of existing electrochemical devices and improve mechanical reliability of the electrochemical device. This object is solved by the subject matter of independent claim 1. Preferred embodiments are defined in the dependent claims.

An embodiment of this application provides an electrochemical device, including a body and a first protector. The first protector is disposed at an end of the body, where the end is provided with the tab. A part of the tab is disposed in the first protector, and another part of the tab extends out of the first protector.

The first protector is disposed at the end provided with the tab on the body, thereby avoiding the risk that the electrochemical device fails due to a mechanical action. For example, when the electrochemical device is impacted or wobbled, the first protector can prevent a top seal region of the electrochemical device from being burst open due to an impact from an electrolyte solution, and prevent failure of a head corner of the electrochemical device. In addition, by using the hot-melt and heat-absorbing effects of the first protector, the first protector can exert some cooling effect on the electrochemical device.

Optionally, the body of the electrochemical device further includes a plurality of lateral faces connected to the end provided with the tab. The first protector further covers a partial region of the plurality of lateral faces. The partial region is connected to the end provided with the tab on the body. The first protector extends to a partial region of the plurality of lateral faces, so that the first protector can be closely combined with the body.

Optionally, in at least the corner region of the body, the first protector extends to the partial region of a plurality of lateral faces, so as to reinforce the corners that are prone to be burst open.

Optionally, a frangible structure is disposed at a top seal at which the first protector covers the body. For example, the frangible structure may be a notch or the like. A region for pressure relief in a case of thermal runaway, such as the top seal of the body, is usually designed on the body. The frangible structure disposed at the top seal on the first protector can prevent the first protector from affecting the pressure relief design of the electrochemical device. Further optionally, the frangible structure may correspond to a position at which a pressure relief valve of the body is located. When an abnormality causes thermal runaway, the gas generated inside the body can burst open the frangible structure on the packaging shell of the body to avoid explosion.

Optionally, the first protector covers at least the top seal of the electrochemical device. With the top seal covered with the first protector, the easily breakable top seal can be reinforced to prevent the top seal at the head of the body from being burst open.

Optionally, a cross-section of the first protector includes an L-shaped structure, thereby saving material without affecting the function of the first protector, and providing a workspace for subsequent processes.

Optionally, a first through-hole is provided in the first protector. The tab of the body extends out of the first protector from the first through-hole.

Optionally, the first protector and the body are integrated to facilitate operations on the electrochemical device and provide protection during manufacturing.

Optionally, a second through-hole used for positioning is provided in the first protector.

Optionally, the electrochemical device further includes a sensor and a wire. The sensor is in contact with the body and disposed between the first protector and the body. The wire is electrically connected to the sensor and protrudes from the second through-hole of the first protector.

Optionally, the electrochemical device further includes a second protector, disposed at a second end of the body, and the second end is opposite to the end provided with the tab on the body. The second protector can reinforce and protect the second end of the body.

Optionally, the electrochemical device further includes: a third protector, disposed on a first face of the body, and the first face is connected to both the end provided with the tab and the second end of the body. The third protector can reinforce and protect the lateral face of the electrochemical device.

Optionally, the third protector includes: a first surface and a second surface, and a first lateral face and a second lateral face that are connected to the first surface and the second surface respectively. A groove adapted to a lateral edge of the body is provided on the second lateral face.

Optionally, the first lateral face protrudes outward to form an arc-shaped bulge, and the arc-shaped bulge matches an arc-shaped mounting groove inside a module housing.

Optionally, the first protector and the second protector are formed in one piece. Alternatively, the first protector, the second protector, and the third protector are formed in one piece. For example, after packaging, at least one of the above protectors may be formed at a time on the packaging shell of the electrochemical device by low-pressure injection molding or potting. Alternatively, the first protector and the second protector are integrated with the body to form a whole; or, the first protector, the second protector, and the third protector are integrated with the body to form a whole.

Optionally, at least one of the first protector, the second protector, or the third protector is an elastomer made of potting glue or plastic.

Optionally, an elastic modulus of the elastomer is greater than 5 MPa.

This application further provides a battery pack, including at least two electrochemical devices according to some embodiments described above. The at least two electrochemical devices are stacked.

An embodiment of this application further provides a method for manufacturing an electrochemical device, including: preparing a body; disposing a first protector at an end of the body, where the end is provided with a tab; and covering a part of the tab with the first protector.

Optionally, a first protector is disposed at an end of the body, where the end is an end provided with a tab; and a second protector is further disposed at a second end of the body, and the second end is opposite to the end provided with the tab on the body.

The method for manufacturing an electrochemical device according to this application can form and dispose a protector on the body, improve the mechanical properties of the electrochemical device, and reduce the risk of subsequent failure of the electrochemical device. The method is simple, convenient, and cost-effective.

Optionally, the disposing the first protector at an end provided with the tab on the body includes: sleeving an encircling accessory on the body at an end provided with the tab, and then placing the body sleeved with the encircling accessory into a piece of injection molding equipment or potting equipment to undergo an injection molding or potting process; and combining the encircling accessory with an injection molding or potting material to form the first protector after completion of the injection molding or potting process.

An embodiment of this application further provides an electrical device, including a load and an electrochemical device according to any one of the embodiments described above. The electrochemical device supplies power to the load. Optionally, the electrical device is an electric vehicle.

### BRIEF DESCRIPTION OF DRAWINGS

To describe the technical solutions of some embodiments of this application more clearly, the following outlines the drawings to be used in some embodiments of this application. Apparently, the drawings outlined below are merely some embodiments of this application. A person of skilled in the art may derive other drawings from the drawings.
FIG. 1 and FIG. 2 are schematic structural diagrams of an electrochemical device according to a first embodiment of this application;
FIG. 3 and FIG. 4 are schematic structural diagrams of an electrochemical device according to a second embodiment of this application;
FIG. 5 and FIG. 6 are schematic structural diagrams of an electrochemical device according to a third embodiment of this application;
FIG. 7 is a schematic diagram of a partial structure of an electrochemical device according to a fourth embodiment of this application;
FIG. 8 is a schematic structural diagram of an electrochemical device according to a fifth embodiment of this application;
FIG. 9 is a schematic structural diagram of an electrochemical device according to a sixth embodiment of this application;
FIG. 10 and FIG. 11 are schematic structural diagrams of an electrochemical device according to a seventh embodiment of this application;
FIG. 12 and FIG. 13 are schematic structural diagrams of an electrochemical device according to an eighth embodiment of this application;
FIG. 14 and FIG. 15 are schematic structural diagrams of an electrochemical device according to a ninth embodiment of this application;
FIG. 16 is a schematic flowchart of a method for manufacturing an electrochemical device according to an embodiment of this application;
FIG. 17 is a schematic diagram of injection molding performed by using an encircling accessory according to an embodiment of this application;
FIG. 18 is a schematic structural diagram of an electrochemical device according to a tenth embodiment of this application;
FIG. 19 is a schematic structural diagram of an electrochemical device according to an eleventh embodiment of this application;
FIG. 20 is a schematic exploded view of a battery pack according to an embodiment of this application;
FIG. 21 is a schematic structural diagram of a plurality of stacked electrochemical devices according to an embodiment of this application;
FIG. 22 is a schematic exploded view of a battery pack according to another embodiment of this application;
FIG. 23 is a schematic outside view of a battery pack according to an embodiment of this application;
FIG. 24 is a schematic structural diagram of a third protector according to an embodiment of this application;
FIG. 25 is another schematic structural diagram of a third protector according to an embodiment of this application;
FIG. 26 is a schematic structural diagram of a housing according to an embodiment of this application;
FIG. 27 is a schematic structural diagram of an electrochemical device applied in a battery pack shown in FIG. 22; and
FIG. 28 is a schematic flowchart of a method for manufacturing a battery pack according to an embodiment of this application.

### DETAILED DESCRIPTION OF EMBODIMENTS

The following describes the technical solutions of some embodiments of this application with reference to accompanying drawings clearly and comprehensively. Apparently, the described of some embodiments are a part of rather than all of the embodiments of this application. To the extent that no conflict occurs, the following some embodiments and the technical features thereof may be combined with each other.

An electrochemical device referred to in this application includes all types of devices in which an electrochemical reaction occurs. As an example, the electrochemical device includes, but is not limited to, all types of primary batteries, secondary batteries, fuel cells, solar cells, and capacitors (such as super capacitors). Particularly, the electrochemical device is preferably a lithium secondary battery, including but not limited to, a lithium metal secondary battery, a lithium-ion secondary battery, a lithium polymer secondary battery, or a lithium-ion polymer secondary battery.

Pouch-type cells are widely used by virtue of advantages such as safety, a light weight, a high battery capacity, high cycle performance, low internal resistance, and flexible design. A pouch-type cell includes an aluminum laminated film, an electrode assembly (also referred to jelly roll) continuously wound inside the aluminum laminated film package, and an electrolyte solution. The electrode assembly is led out through a tab at the head of the cell.

The electrochemical device in an embodiment of this application may be referred to as a cell, and particularly, may be a pouch-type cell. Although the technical solutions of this application are described by using the pouch-type cell as an example, the application scope of the technical solutions of this application is not limited to the pouch-type cell.

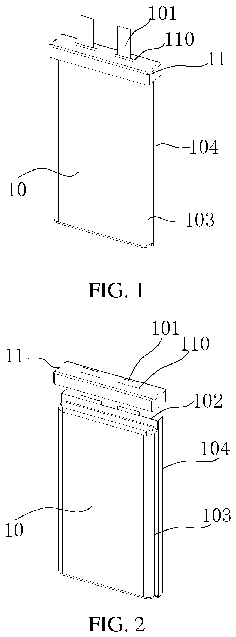

As shown in FIG. 1 and FIG. 2, an embodiment of this application provides an electrochemical device. The electrochemical device includes a body 10 and a first protector 11. The body 10 employs an arrangement of leading out tabs from a single side. That is, two tabs 101 are disposed at the head of the body 10. The first protector 11 is disposed at one end of the body 10, and the end is provided with the tabs 101, and specifically, is the head of the body 10 in FIG. 1. A part of the tab 101 is disposed in the first protector 11, and another part of the tab 101 extends out of the first protector 11.

Optionally, a first through-hole 110 may be provided in the first protector 11. The tab 101 of the body 10 extends out of the first protector 11 from the first through-hole 110.

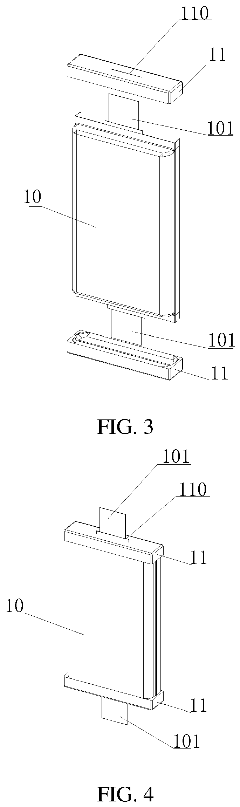

The body 10 of the electrochemical device may include a stand-alone battery such as a battery cell. The end provided with the tabs 101 on the body 10 means an end of the body 10 from which the tabs 101 are led out, and generally denotes the head of the battery cell. In some bodies 10, the tabs may be led out from both sides. That is, a tab is extended out from the first end of the body 10, and another tab is extended out from the second end of the body. In this case, the first protector 11 is located at the first end and the second end of the body 10 correspondingly, as shown in FIG. 3 and FIG. 4.

Optionally, the first protector 11 may form a stand-alone accessory disposed at an end provided with the tab 101 on the body 10. Alternatively, the first protector 11 may be directly formed at the end from which the tab 101 is led out of body 10 (such as the head of the battery cell), and formed by low-pressure injection molding or other means and integrated with the housing of the body 10.

The first protector 11 is disposed at the head of the electrochemical device,that is, at the end from which the tab 101 is led out, thereby avoiding the risk that the electrochemical device fails due to a mechanical action. For example, when the electrochemical device is impacted or wobbled, the first protector can prevent a top seal region of the electrochemical device from being burst open due to an impact from an electrolyte solution, and prevent failure of a head corner of the electrochemical device. In addition, by using the hot-melt and heat-absorbing effects of the first protector, the first protector 11 can exert a cooling effect on the electrochemical device to some extent.

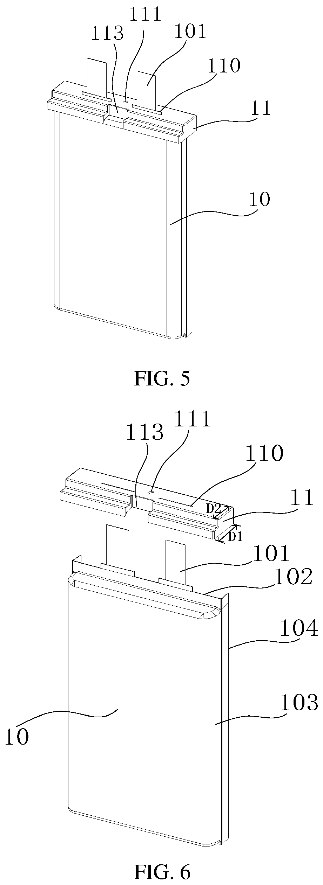

Optionally, as shown in FIG. 1 and FIG. 6, the body 10 of the electrochemical device further includes a plurality of lateral faces connected to the end provided with the tab 101. The first protector 11 further covers a partial region of the plurality of lateral faces. The partial region is connected to one end provided with the tab 101 on the body 10. The first protector 11 may further cover a partial region of a plurality of lateral faces downward to closely combine the first protector 11 with the body 10.

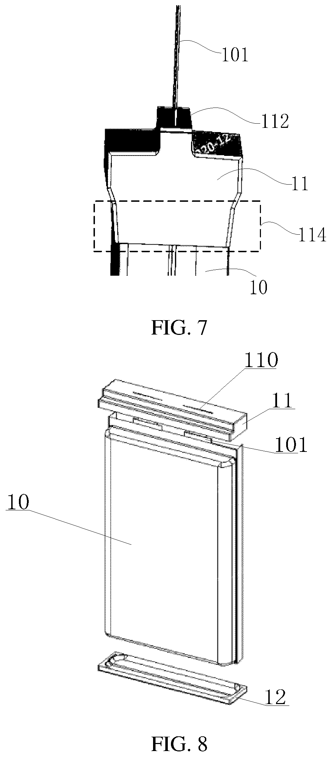

Optionally, the first protector 11 extends to a partial region of the first surface 103, so as to cover at least a corner region of the body 10 to reinforce the corner that is prone to be burst open. The first lateral face means a face of the body 10, the face on which a side seal 104 is formed. As shown in FIG. 7, the first protector 11 includes a corner reinforcement part 114 extending to a partial region of the first surface 103. The corner reinforcement part 114 reinforces the corner that is prone to be burst open, so as to solve the problem that the corner is prone to fail.

Optionally, the top face of the first protector 11 is flush with, or is by 0.5 mm to 3 mm higher than, the end face of the top seal 102 of the body10. The bottom face of the first protector 11 may be flush with a top line of a major face of the body10, or, the first protector 11 may extend downward to the body face and exceed the top line by 0.5 mm to 3 mm.

Optionally, as shown in FIG. 5 and FIG. 6, a frangible structure may be disposed at first protector 11,the frangible structure may be disposed at a top seal 102 at which the first protector 11 covers the body 10, or disposed at a joint at which the first protector abuts the body 10. For example, the frangible structure may be a notch 113. At the notch 113, the first protector 11 is not covered. The frangible structure means a part at which the mechanical strength of the first protector 11 is lower than that of the remaining part. The electrochemical device can release pressure from the frangible structure in a case of thermal runaway caused by an abnormality. For example, the frangible structure may be covered with a thinner first protector 11, or a film structure of the first protector 11 at the frangible structure is loose, or the first protector 11 at the frangible structure has undergone a process that brings the above weakening effect.

A pressure relief region for an explosion-proof purpose is generally designed on the body 10. The thickness of the first protector 11 covered by the pressure relief region may be set to be less than a first thickness, so as to form the frangible structure. Alternatively, on the first protector 11, a notch 113 is provided in a region corresponding to the designed pressure relief region. The pressure relief region does not cover the first protector 11, or the thickness of the covered first protector 11 is less than the first thickness, thereby avoiding the excessive thickness of the first protector 11 from affecting the pressure relief design of the electrochemical device. A middle region of the top seal 102, which is located between the two tabs 101, is generally selected as a pressure relief region on the body 10. When the body 10 covers the protector, a notch 113 or a frangible structure needs to be provided in this region to meet explosion-proof requirements. Further optionally, the pressure relief region may correspond to a position at which a pressure relief valve of the body 10 is located.

When an abnormality causes thermal runaway, the gas generated inside the body 10 can burst open the packaging shell at the notch 113 or the frangible structure to avoid explosion. In this way, the first protector 11 is prevented from affecting the pressure relief in a case of thermal runaway.

Optionally, as shown in FIG. 6, a top seal 102 is formed on the body 10, and the first protector 11 at least covers the top seal 102. With the top seal 102 covered with the first protector 11, the easily breakable top seal 102 can be reinforced to prevent the top seal 102 at the head of the body 10 from being burst open.

Optionally, as shown in FIG. 5, FIG. 6, and FIG. 7, a cross-section of the first protector includes an L-shaped structure.

As shown in FIG. 6, the first protector 11 includes a first end close to the body 10 and a second end far away from the body 10. The thickness D2 of the second end of the first protector 11 is less than the thickness of the first end D1. Here, both the thickness D1 of the first end of the first protector 11 and the thickness D2 of the second end are thicknesses in a direction perpendicular to the thickness direction of the body 10.

The end of the first protector 11, which is away from the body 10, is thinned in the length direction of the tab 101, thereby saving material without affecting the function of the first protector 11, and providing a workspace for a subsequent process of welding tabs 101. Optionally, as shown in FIG. 5, one side of the first protector 11 is thinned. That is, the cross section of the first protector 11 is L-shaped. Further, as shown in FIG. 7 and FIG. 8, the first protector 11 may be thinned on both sides. A boss 112 covering a part of the tab 101 is formed at the top of the first protector 11.

Optionally, as shown in FIG. 5 and FIG. 6, a second through-hole 111 used for positioning is provided in the first protector 11. The second through-hole 111 may be formed by injection molding in a position at which a positioning apparatus or clamp fixes the body 10 and at which the first protector 11 is formed by injection molding or other means. The second through-hole 111 may be in other shapes instead, and is not limited to a hole. For example, the second through-hole 111 may be in the shape of a slit.

Optionally, the first protector 11 and the body 10 are integrated to facilitate operations on the electrochemical device and provide protection during manufacturing.

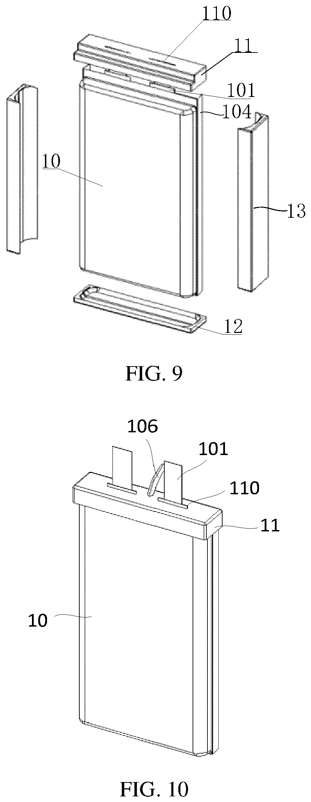

In some embodiments, as shown in FIG. 9, the electrochemical device further includes a second protector 12, disposed at a second end of the body 10. The second end is opposite to the end provided with the tab 101 on the body 10. The second protector 12 can reinforce and protect the second end of the body 10. The first end (such as the head) and the second end (such as the ending) of the body 10 covers or is attached to the protector for reinforcement, so that the head and ending of the body 10 can be protected without increasing the thickness of the body 10, thereby improving the mechanical properties of the electrochemical device.

Optionally, the electrochemical device further includes: a third protector 13, disposed on a first surface 103 of the body. If the electrode assembly is a jelly-roll type assembly, the first surface 103 corresponds to folded edges of the jelly-roll assembly. If the electrode assembly is a stacked-type assembly, the first surface 103 is opposite to the lateral face of the electrode plate. The side seal 104 is generally located on the first surface 103. The third protector 13 can reinforce and protect the lateral edges of the electrochemical device. Optionally, the covering thickness of the third protector 13 may be approximately 0.3 to 2 mm.

Optionally, the third protector 13 internally covers at least the side seal 104 of the body 10, thereby reinforcing the easily breakable side seal 104 and preventing the side seal 104 of the electrochemical device from being burst open. Optionally, an outer lateral face of the third protector may be a plane, an arc face or another shape.

Optionally, the first protector 11 and the second protector 12 are formed in one piece. Alternatively, the first protector 11, the second protector 12, and the third protector 13 are formed in one piece. For example, after packaging, at least one of the above protectors may be formed at a time on the packaging shell of the electrochemical device by low-pressure injection molding or potting. Optionally, the protector may be made of another material that is easy to be molded together with the packaging shell of the body 10 in one piece.

Optionally, at least one of the above protectors is an elastomer with an elastic modulus greater than 5 MPa. After the protectors made of a material with an elastic modulus greater than 5 MPa cover the body 10 and are put into the housing along with the body 10, the protectors exert an appropriate force on the stacked body 10 through the shell to compress and constrain the body 10. An overly small elastic modulus may be unable to offset the external impact, thereby resulting in local deformation and chemical degradation of the separator.

In the electrochemical device provided in this embodiment of this application, protectors used as a protection mechanism cover the head, or both the head and the ending, or a surrounding region containing the head, so as to provide protection for the electrochemical device such as a battery cell, improve the mechanical reliability of the electrochemical device, prevent the top seal of the electrochemical device from being burst open, avoid failure of the electrochemical device at a corner of the head part, and exert some cooling effect on the tabs of the electrochemical device. In addition, the protection structure protects the top seal at the head part from being burst open without compromising the explosion-proof function. Further, more importantly, the protection structure can be formed after the packaging process, thereby avoiding failure caused by a mechanical action in a subsequent manufacturing process. The electrochemical device that employs this protection structure requires no integral potting in a subsequent packaging process (that is, a PACK process), and requires no additional protection mechanisms such as foam or other components. The protection structure may be fixed in the housing by bonding or other means. Alternatively, as mentioned above, the protection structure may be fixed in the housing by manipulating a mutual compression force generated by an interference fit between the electrochemical device and the housing, and between different electrochemical devices, for example.

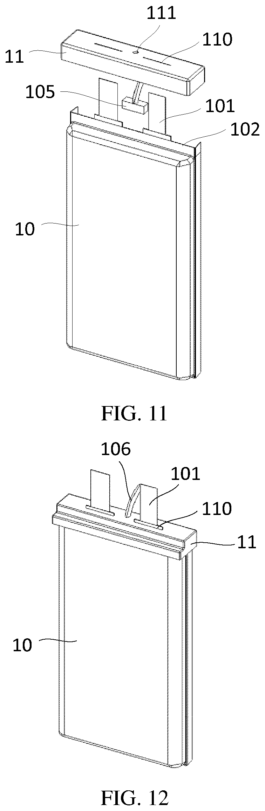

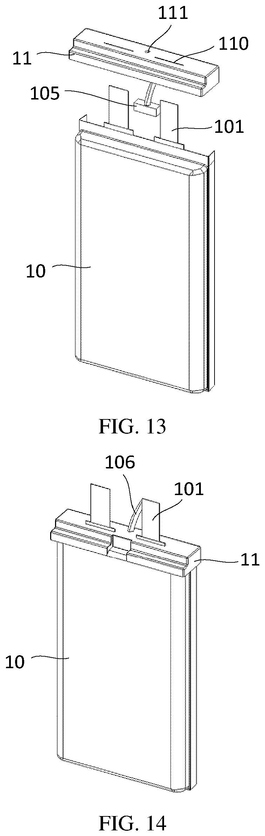

In this embodiment of this application, in an implementation, the electrochemical device may further include a sensor 105 and a wire 106. Referring to FIG. 10 to FIG. 15 together, the sensor 105 is in contact with the body 10 and disposed between the first protector 11 and the housing 10. The sensor 105 is configured to acquire preset parameters of the body 10. The wire 106 is electrically connected to the sensor 105 and protrudes from the second through-hole 111 of the first protector10. The wire 106 may be electrically connected to an external device, so that the sensor 105 transmits the acquired preset parameters to the external device to perform a corresponding function. In some implementations, the sensor 105 includes, but is not limited to, a temperature sensor. The sensor 105 may be disposed between two tabs 101 or adjacent to the tabs 101, and configured to detect the temperature of the tabs 101 or the body 10. The external devices include, but are not limited to, a BMS (Battery Management System, battery management system) circuit board, configured to control the charging, discharging, and other operations of the body 10 based on the temperature acquired by the sensor 105, so as to ensure safety.

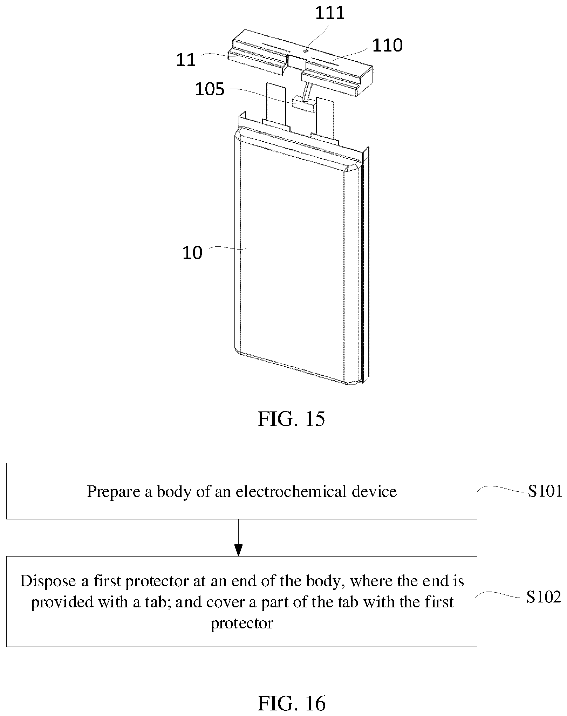

As shown in FIG. 16, an embodiment of this application further provides a method for manufacturing an electrochemical device. The method includes the following steps:
S101. Preparing a body 10.

S102. Disposing a first protector 11 at an end of the body 10, where the end is provided with a tab 101; and covering a part of the tab 101 with the first protector 11.

Optionally, in step S102, a first protector 11 is disposed at an end of the body 10, where the end is provided with a tab 101; and a second protector 12 may be further disposed at a second end of the body 10, and the second end is opposite to the end provided with the tab 101 on the body 10.

Optionally, in step S102, a first protector 11 is disposed at an end of the body 10, where the end is provided with a tab 101; a second protector 12 may be further disposed at a second end of the body 10; and, a third protector 13 is disposed at a first lateral face of the body 10.

In the method for manufacturing an electrochemical device according to this application of this application, the protector is at least formed at an end provided with the tab on the body 10, thereby improving the mechanical properties of the electrochemical device, facilitating operations in a subsequent manufacturing process, and making the electrochemical device not prone to fail when the electrochemical device is subjected to a mechanical action caused by collision, dropping, and the like.

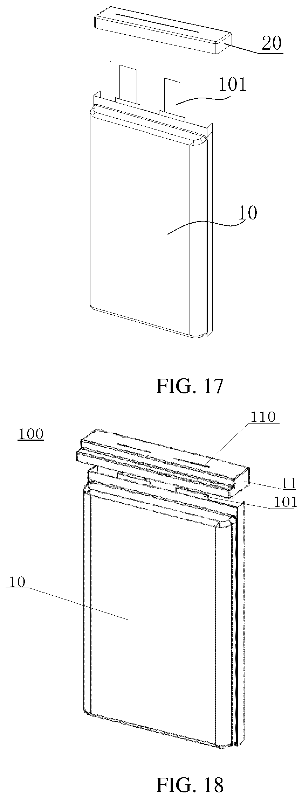

Optionally, an embodiment of this application further provides another method for manufacturing an electrochemical device. The method differs from the foregoing manufacturing method in the following operations: providing an encircling accessory 20, as shown in FIG. 17, sleeving the encircling accessory 20 on the body 10 at an end provided with the tab 101, and then placing the body 10 sleeved with the encircling accessory 20 into a piece of injection molding equipment or potting equipment to undergo an injection molding or potting process; and combining the encircling accessory 20 with an injection molding or potting material to form the first protector 11 after completion of the injection molding or potting process.

The encircling accessory 20 is connected to the body 10 through the injection molding material or potting material, and is combined with the injection molding material or potting material to form the first protector 11 at the head of the body.

The pouch-type cell is packaged in an aluminum laminated film. The aluminum laminated film provides a relatively large deformation space, making it inconvenient for positioning during injection molding or potting. The encircling accessory 20 is sleeved at an end provided with the tab 101 on the body 10, so that the body 10 can be positioned through the encircling accessory 20 during injection molding. In addition, the encircling accessory 20 can improve the adaptability of the injection molding or potting equipment.

An embodiment of this application further provides another method for manufacturing an electrochemical device. The method includes:
preparing a body 10;
preparing a protector, where the protector includes at least the first protector 11; disposing the first protector 11 at an end provided with the tab 101 on the body 10; or
preparing the first protector 11 and the second protector 12 described above, and disposing the first protector 11 and the second protector 12 at an end provided with the tab and an opposite second end of the body 10 respectively; or
preparing protectors including the first protector 11, the second protector 12, and the third protector 13, and disposing the first to third protectors at an end provided with the tab, an opposite second end, and a first lateral face of the body 10, respectively.

Relevant specific structures may be learned by referring to the foregoing some embodiments, and are not described in detail here again.

An embodiment of this application provides a battery pack, including at least two stacked electrochemical devices. Referring to FIG. 18, the electrochemical device 100 includes a body 10 and a tab 101. The body 10 includes a packaging film, an electrode assembly accommodated in the packaging film, and a tab 101 electrically connected to the electrode assembly. The electrochemical device 100 further includes a first protector 11. The first protector 11 is attached to an end of the body 10, where the end is provided with the tab 101. A part of the tab 101 is disposed in the first protector 11, and another part of the tab 101 extends out of the first protector 11.

Optionally, a first through-hole 110 is provided in the first protector 11. One end of the tab 101 is electrically connected to the electrode assembly, and another end of the tab extends out of the first protector 11 from the first through-hole 110.

The body 10 may include a stand-alone battery such as a battery cell. The end provided with the tab 101 on the body 10 means an end of the body 10 of the electrochemical device from which the tab 101 is led out, and generally denotes the head of the battery cell. Preferably, the first protector 11 may be attached to the end provided with the tab 101 (for example, the head of the battery cell), and integrated with the packaging film at this end of the body 10. In addition, the first protector 11 may form a stand-alone accessory mounted at an end provided with the tab 101 on the body 10.

The electrochemical devices 100 with the first protector 11 are stacked together, and fixed inside the housing by a specified connection means, and other components such as a protection circuit board are mounted to form a battery pack. The specified connection means may be, for example, adhesive bonding. A protection circuit is provided on the protection circuit board, and is mainly configured to protect the electrochemical device against over-discharging, over-charging, and over-current, provide short-circuit protection, and serve other functions not limited herein.

The first protector 11 is disposed at the head of the body 10, that is, at the end from which the tab 101 is led out, thereby avoiding the risk that the battery pack and the product containing the battery pack fails due to a mechanical action. For example, when the electrochemical device is impacted or wobbled, the first protector10can prevent a top seal region of the electrochemical device from being burst open due to an impact from an electrolyte solution, and prevent failure of a head corner of the electrochemical device. In addition, by using the hot-melt and heat-absorbing effects of the first protector, the first protector can exert a cooling effect on the electrochemical device to some extent.

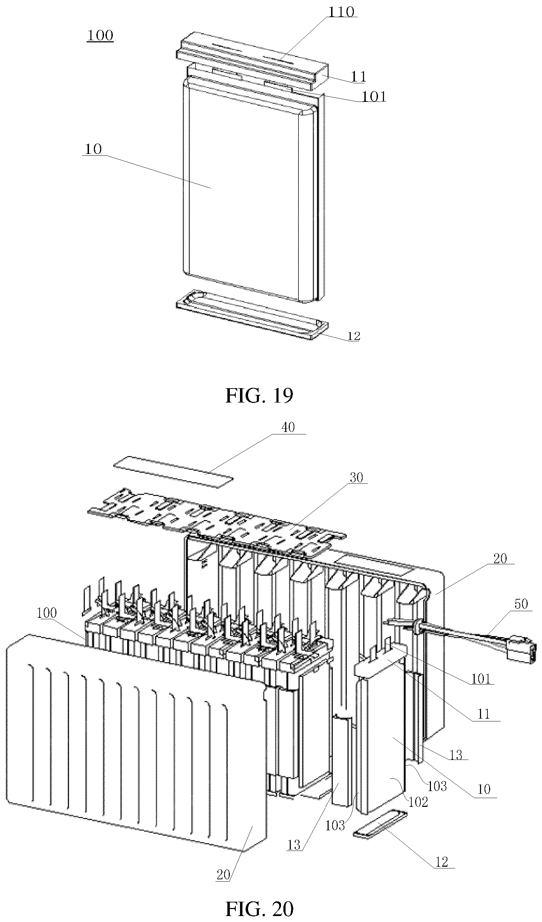

As shown in FIG. 19, the battery pack in this embodiment differs from the embodiment illustrated in FIG. 18 in that, the electrochemical device 100 in this embodiment further includes a second protector 12 disposed at a second end of the body 10 in addition to the first protector 11. The second end is opposite to the end provided with the tab 101 on the body 10.

Preferably, the second protector 12 may be attached to the ending of the body 10 and integrated with the ending packaging film. The ending of the body 10 is the second end of the body 10 opposite to the end provided with the tab 101. Alternatively, the second protector 12 may form a stand-alone accessory mounted at the ending of the body 10.

The first protector 11 and the second protector 12 may both cover a part of the body 10. The first protector 11 and the second protector 12 can reinforce and protect the body 10, especially the pouch-type cell, thereby facilitating subsequent stacking of the bodies 10, especially the pouch-type cells.

The first protector 11 and the second protector 12 may form a regular structure that facilitates stacking, thereby making it convenient to stack a plurality of electrochemical devices 100 to form a battery pack. The regular structure means a structure in which the first protector 11 and the second protector 12 wrap the head and ending of the body 10, so that the electrochemical device 100 with the first protector 11 and the second protector 12 forms an integral structure that facilitates stacking. The structure includes a contact face that facilitates stacking of the electrochemical devices 100, so that a plurality of electrochemical devices 100 can be stacked and extended to achieve the purpose of scaling out. The regular structure may be, for example, a cube, a regular hexahedron, or the like.

The first protector 11 may be formed in one piece, and the second protector 12 may be formed in one piece. For example, the first protector 11 and the second protector 12 may be formed at a time by low-pressure injection molding at an end provided with the tab 101 on the body 10 and a second end opposite to said end. The first protector 11 and the second protector 12 may be made of potting glue or plastic. The elastic protector made of potting glue or plastic facilitates integration with the packaging film of the pouch-type cell.

Optionally, as shown in FIG. 20, the battery pack may further include a housing 20 configured to accommodate an electrochemical device 100. The housing 20 is in interference fit with at least two electrochemical devices 100 accommodated in the housing 20.

After the first protector 11and second protector12 are attached to the body 10 and put into the housing 20 along with the body 10, an appropriate force may be exerted on the stacked electrochemical devices 100 through the housing 20 to compress and constrain the electrochemical devices 100 in the housing 10, so as to achieve the effect of fixing the electrochemical devices 100 in the housing 20.

In the battery pack of this embodiment, the protectors are disposed at both the head and ending of the body 10, thereby preventing the corners at the head and ending of the body 10 from failing due to a mechanical action. In addition, by using the hot-melt and heat-absorbing effects of the first protector 11 and the second protector 12, the protectors can exert some cooling effect on the electrochemical devices 100.

In contrast with the practice of disposing a bracket box and being fixed with adhesive, the battery pack of this embodiment is superior in reliability, fewer assembling processes, simplicity, convenience, easy operation, and cost-effectiveness. In contrast to the integral potting scheme, the battery pack of this embodiment is superior in light weight, convenience of assembling, and frugality of potting materials.

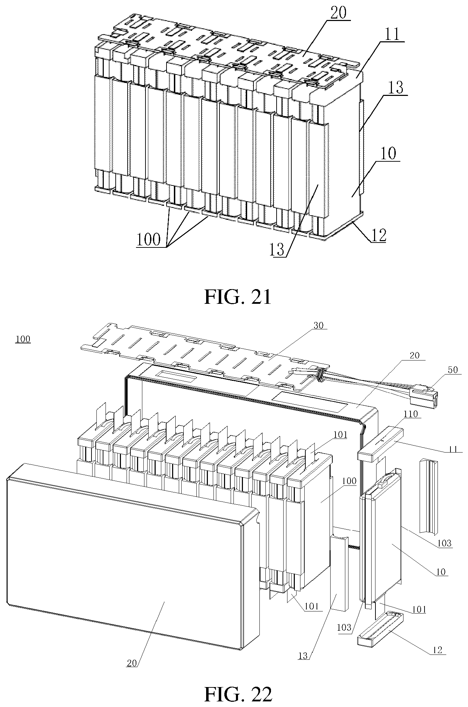

FIG. 20 is a schematic structural diagram of a battery pack according to an embodiment of this application; and FIG. 21 is a three-dimensional schematic structural diagram of a plurality of stacked electrochemical devices according to an embodiment of this application.

As shown in FIG. 20 and FIG. 21, the battery pack in this embodiment differs from the embodiments illustrated in FIG. 18 and FIG. 19 in that, the electrochemical device 100 in this embodiment further includes a third protector 103 in addition to the first protector 11 at the end provided with the tab 101 on the body 10 and the second protector 12 disposed at the second end of the body 10. The third protector13 is disposed on a first surface 103 of the body 10. The first surface 103 is connected to the end provided with the tab 101 on the body 10.

The body 10 includes a plurality of later faces connected to the end provided with the tab 101. The plurality of lateral faces include a major face 102 and a first surface 103 of the body 10. For example, for a pouch-type cell, the first surface 103 may be a lateral face that includes a fold of an aluminum laminated film. The fold of the aluminum laminated film includes the sealing seam and a trimmed edge. Such parts are frangible points of the sealed aluminum laminated film. Optionally, the third protector 13 covers at least the frangible points to reinforce and protect the body 10.

In some embodiments, the third protector 13 may form a stand-alone accessory mounted on the first surface 103 of the electrochemical device 10.

Optionally, the third protector 13 is attached to the lateral edge of the body 10, and integrated with the sealing film and the lateral edge of the sealed housing.

The housing 20 in FIG. 20 is formed of two parts coupled to each other. The battery pack further includes a protection circuit board 30. The protection circuit board 30 is disposed between the housing 20 and the first protector 11, and is electrically connected to the electrochemical device 100. The protection circuit board 30 is disposed on the electrochemical device 100 and spaced from the electrochemical device by the first protector 11, thereby avoiding the mechanical actions such as mutual friction and collision between the electrochemical device 100 and the protection circuit board 30, and protecting both the electrochemical device 100 and the protection circuit board 30. The reference numeral 40 is a label affixed on the right side, and 50 is a communication harness that connects the battery pack to an external component.

The first protector 11, the second protector 12, and the third protector 13 are formed in one piece in a regular structure that facilitates stacking, thereby making it convenient to stack a plurality of electrochemical devices 100 to form a battery pack. The regular structure means a structure integrally formed by the first protector 11, the second protector 12, and the third protector 13 to facilitate stacking. The structure includes at least a contact face that facilitates stacking of a plurality of electrochemical devices 100. The plurality of electrochemical devices 100 are stacked and extended to achieve a purpose of scaling out. The regular structure may be, for example, a cube, a regular hexahedron, or the like.

Optionally, as shown in FIG. 21, the first protector 11, the second protector 12, and the third protector 13 integrally form a protection sleeve for the electrochemical devices 10, and assume an external structure that facilitates mutual stacking.

Preferably, the first protector 11, the second protector 12, and the third protector 13 may be formed in one piece in the following way: the first protector 11, the second protector 12, and the third protector 13 are formed at a time by low-pressure injection molding at an end provided with the tab 101 on the body 10, the second end opposite to the end provide with the tab 101, and the first surface 103. The first to third protectors may be made of potting glue or plastic. The first to third protectors may be made of a material that facilitates integration with the packaging shell of the body.

In addition, the housing 30 is in interference fit with at least two electrochemical devices accommodated in the housing 20. Through the interference fit in this embodiment, the housing 20 exerts an appropriate force on the stacked electrochemical devices to compress and constrain the electrochemical devices in the housing, so as to achieve the effect of fixing the electrochemical devices in the housing. This simplifies the module production, consumes fewer materials, and simplifies the manufacturing process.

The first protector 11, the second protector 12, and the third protector 13 may be made of an elastic material with an elastic modulus greater than 5 MPa. After the protectors made of the material with an elastic modulus greater than 5 MPa are attached to the electrochemical devices and put into the housing 20 along with the electrochemical devices, the interference fit between the housing 20 and the electrochemical devices in the housing 20 causes the housing 20 to exert an appropriate force on the stacked electrochemical devices 100 to compress and constrain the electrochemical devices 100 in the housing, so as to achieve the effect of fixing the electrochemical devices 100 in the housing. An overly small elastic modulus of the protector may be unable to offset the external impact, thereby resulting in local deformation and chemical degradation of the separator. An excessive elastic modulus of the protector may be unable to fix the electrochemical devices 100 in the housing.

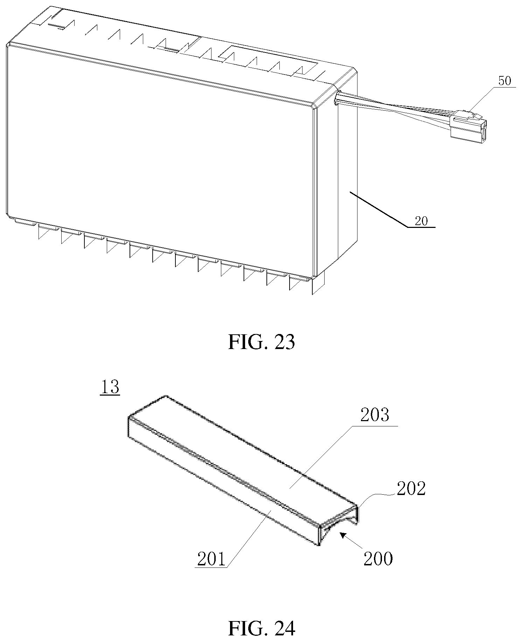

FIG. 22 is a schematic structural diagram of another battery pack according to an embodiment of this application, and FIG. 23 is a schematic outside view of a battery pack according to an embodiment of this application.

As shown in FIG. 22 and FIG. 23, the battery pack of this embodiment differs from the embodiment illustrated in FIG. 20 in that the electrochemical device 100 of this application adopts a scheme of leading out tabs from two sides. The head and the ending of the electrochemical device 100 each is provided with a tab 101 extending outward.

FIG. 24 is a schematic structural diagram of a third protector 13 disposed at a lateral edge of the electrochemical device 100 according to this embodiment. The third protector 13 includes a first surface 201 and a second surface 202 disposed opposite to each other and parallel to each other. The two lateral faces connected to the first surface 201 and the second surface 202 are a first lateral face 203 and a second lateral face respectively. A groove 200 adapted to the lateral edge of the body 10 is provided on the second lateral face opposite to the first lateral face 203. The third protector 13 may include a plurality of sections instead. That is, the third protector 13 includes three sections that cover an upper part, a middle part, and a lower part of the lateral edge respectively.

The first lateral face 203 may be a flat face. In some embodiments, the first lateral face 203 may protrude outward to form an arc-shaped bulge. The arc-shaped bulge matches an arc-shaped mounting groove inside a module housing.

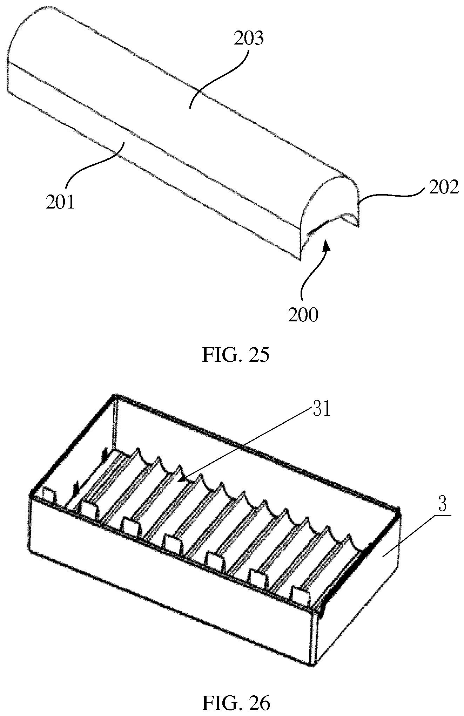

In some embodiments, as shown in FIG. 25 and FIG. 26, a groove 200 is provided on the second lateral face of the third protector 13. The first lateral face 203 of the third protector 13 protrudes outward to form an arc-shaped bulge. The arc-shaped bulge matches the arc-shaped groove 31 inside the housing (also known as module housing) 3. As shown in FIG. 26, an arc-shaped groove 31 for assembling a bracket box is provided inside some housings 3 available currently. The first lateral face 203 of the third protector 13 protrudes outward to form an arc-shaped bulge that matches the arc-shaped groove inside the existing housing 3. The existing housing 3 may be utilized directly.

The first protector 11, the second protector 12, and the third protector 13 may be directly formed on a sealing film or a sealed housing of the body 10 by low pressure injection molding or other means, and integrated with the sealing film or the sealed housing.

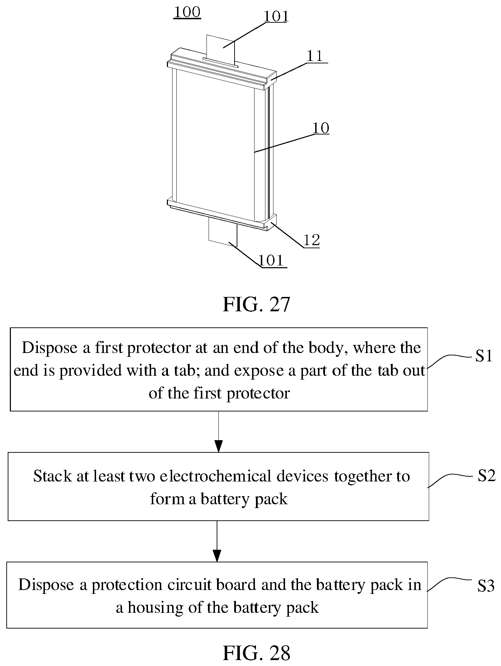

FIG. 27 is a schematic structural diagram of an electrochemical device 100 applicable in a battery pack in an embodiment shown in FIG. 22. The electrochemical device 100 adopts a scheme of leading out tabs from both sides. At the same time, a first protector 11 and a second protector 12 covering the body 10 are disposed at the head and ending of the electrochemical device 100, and tabs are led out of the head and the ending respectively. The third protector 13 is omissible.

An embodiment of this application further provides a battery module. The battery module is formed of one or more pre-coated cells. On the pre-coated cell, a wrapper is formed at an end provided with the tabs on the battery cell, and the tabs of the battery cell protrude from the wrapped region. The battery cell and the wrapper are formed in one piece. On the battery cell, the tabs may be led out from a single side or led out from two sides respectively. If the tabs are led out from a single side, the wrapper may cover both a tab side and a bottom non-tab side at the same time. The wrapper and the battery cell are formed in one piece. The battery cell may be bonded to the housing structure or another supporting structure, or may be fixed by a constraint force generated by mutual compression rather than by bonding. This module structure prevents the top seal region at the head of the battery cell from bursting open, prevents failure at the corners at the head and ending of the battery cell, accomplishes some cooling effect for the tabs of the battery cell, and is characterized by cost-effectiveness and high reliability. This technical solution is further described below from the perspective of the assembling process.

As shown in FIG. 28, an embodiment of this application further provides a method for manufacturing a battery pack. The method includes the following steps:
S1. Disposing a first protector 11 at an end of the body 10, where the end is provided with a tab; and exposing a part of the tab 101 out of the first protector 11, as shown in FIG. 18.

In this step, the body 10 is pretreated, and a first protector 11 is formed on the tab side of the body 10. Optionally, a first through-hole 110 is provided in the first protector 11. One end of the tab 101 is electrically connected to the electrode assembly, and another end of the tab extends out of the first protector from the first through-hole 110 of the first protector 11. This step may be performed after the packaging process of the battery cell, or after the entire manufacturing process of the battery cell.

S2. Stacking at least two electrochemical devices 100 together to form a battery pack.

S3. Disposing the protection circuit board and the battery pack in a housing of the battery pack.

Optionally, in step S1, a second protector 12 is further formed at a second end of the body 10, and the second end is opposite to the end provided with the tab 101 on the body 10. In step S3, the battery pack may be caused to be in interference fit with the housing, so that the housing 20 exerts a pressure on the stacked electrochemical devices 100. The electrochemical devices 100 are fixed in the housing 20 by the pressure. The first protector and the second protector 12 reinforce and protect the head and ending of the body 10 respectively, and make the electrochemical devices 100 easy to operate.

Further, in step S1, a third protector 13 is further formed on a lateral edge of the body 10. The first protector 11, the second protector 12, and the third protector 13constitute an integral reinforcement and protection apparatus of the body 10, and make the body 10 easy to operate.

During formation of the protectors in step S1, one or more of the first protector 11, the second protector 12, or the third protector 13 may be integrated with the sealing film or sealed housing of the body 10 to form a whole.

For example, in step S1, the first protector 11, the second protector 12, and the third protector 13 are formed at a time by low-pressure injection molding at an end provided with the tab on the body 10, the second end opposite to the end provided with the tab, and the lateral edge connected to both the tab end and the second end. The formed protectors are attached onto the body 10. This method is simple in processing and cost-effective.

An embodiment of this application further provides an electrical device, including a load and an electrochemical device according to some embodiments described above. The electrochemical device supplies power to the load.

The uses of the electrochemical device according to this application are not particularly limited, and the electrochemical device may be used in any electrically powered electronic device known in the prior art. In some embodiments, the electrochemical device of this application is applicable to, but not limited to use in, a standby power supply, an unmanned aerial vehicle, a unicycle electric vehicle, an electric vehicle with two or more wheels, a motorcycle, a bicycle, a lighting appliance, a toy, an electric tool, an industrial and commercial energy storage system, a home energy storage system, or the like.

What is described above is some embodiments of this application, and does not thereby limit the patent scope of this application. All equivalent structural variations made by using the content of this specification and the drawings hereof fall within the patent protection scope of this application as well.

Unless otherwise defined in the context, reference to a process, method, object, or device that "includes" or "comprises" a specific number of elements does not rule out a possibility that the process, method, object, or device further includes other equivalent elements. In addition, parts, features, and elements with the same name in different some embodiments may have the same meaning or different meanings. The specific meanings of the parts, features, and elements need to be determined according to the interpretation thereof provided in some specific embodiments or further determined with reference to the context in some specific embodiments.

Understandably, in the description of this application, a direction or a positional relationship indicated by the terms such as "middle position", "axial direction", "two ends", "up", "down", "front", "rear", "left", "right", "top", "bottom", "inside", or "outside" is a direction or positional relationship based on the illustration in the drawings, and is merely intended for ease or brevity of description of this application, but does not indicate or imply that the indicated apparatus or component is necessarily located in the specified position or constructed or operated in the specified direction. Therefore, such terms are not to be understood as a limitation on this application.

Although the terms such as "first", "second", and "third" are used herein to describe all kinds of information, the information is not limited by the terms. Such terms are merely used to distinguish between different types of information. A noun in the singular form preceded by "a", "an", "the" herein is intended to include the plural form thereof. The terms "or" and "and/or" are interpreted as inclusive, or mean any one or any combination of the items enumerated. No exception of the foregoing definitions occurs unless the combinations of components, functions, steps, or operations are inherently mutually exclusive in some implementations.

## Claims

1. An electrochemical device (100), comprising:
a body (10) comprises a packaging film, an electrode assembly accommodated in the packaging film;
a tab (101) is disposed on the body (10), tab (101) electrically connected to the electrode assembly; and
a first protector (11) disposed at a first end of the body (10), wherein the first end is provided with the tab (101), a part of the tab (101) is disposed in the first protector (11), and another part of the tab (101) extends out of the first protector (11),
wherein the body (10) of the electrochemical device (100) further comprises a plurality of lateral faces connected to the end provided with the tab (101), and
**characterized in that**, the first protector (11) further covers a partial region of the plurality of lateral faces, in at least a corner region of the body (10), and the partial region is directly connected to the end provided with the tab (101) on the body (10).

2. The electrochemical device (100) according to claim 1, wherein a frangible structure is disposed at the first protector (11), and the first protector (11) covers a top seal (102) of the body (10).

3. The electrochemical device (100) according to claim 2, wherein the frangible structure is a notch (113).

4. The electrochemical device (100) according to claim 1, wherein the first protector (11) covers at least the top seal (102) of the body (10).

5. The electrochemical device (100) according to claim 1, wherein a first through-hole (110) is provided in the first protector (11), and the tab (101) extends out of the first protector (11) from the first through-hole (110).

6. The electrochemical device (100) according to claim 1, wherein a second through-hole (111) used for positioning is provided in the first protector (11);
the electrochemical device (100) further comprises a sensor (105) and a wire (106), the sensor (105) is in contact with the body (10) and disposed between the first protector (11) and the body (10), and the wire (106) is electrically connected to the sensor (105) and protrudes from the second through-hole (111).

7. The electrochemical device (100) according to any one of claims 1 to 6, wherein the electrochemical device (100) further comprises: a second protector (12) disposed at a second end of the body (10), and the second end is opposite to the first end.

8. The electrochemical device (100) according to claim 7, wherein the electrochemical device (100) further comprises: a third protector (13) disposed on a first surface (103) of the body (10), and the first surface (103) is connected to both the first end and the second end of the body (10).

9. The electrochemical device (100) according to claim 8, wherein the third protector (13) comprises: a first surface (201), a second surface (202), a first lateral face (203), and a second lateral surface; the first surface (201) is opposite to the second surface (202), the first lateral face (203) is opposite to the second lateral surface;
wherein a groove (200) adapted to a lateral edge of the body (10) is provided on the second lateral surface.

10. The electrochemical device (100) according to claim 9, wherein the first protector (11) and the second protector (12) are formed in one piece;
or,
the first protector (11), the second protector (12), and the third protector (13) are formed in one piece;
or,
the first protector (11) and the second protector (12) are integrated with the body (10) to form a whole;
or,
the first protector (11), the second protector (12), and the third protector (13) are integrated with the body (10) to form a whole.

11. The electrochemical device (100) according to claim 1, wherein the first protector is formed by low-pressure injection molding and integrated with a housing of the body (10).

12. The electrochemical device (100) according to claim 2, wherein the first protector (11) comprises a boss (112) formed at the a top of the first protector (11), the boss (112) covering a part of the tab 101.

13. A battery pack, comprising at least two electrochemical devices (100) according to any one of claims 1 to 12, wherein the at least two electrochemical devices (100) are stacked.

14. An electrical device, comprising a load and the battery pack according to claim 13, wherein the electrochemical device (100) supplies power to the load.

## Patentansprüche

1. Elektrochemische Vorrichtung (100), umfassend:
einen Körper (10) umfasst eine Verpackungsfolie, eine in der Verpackungsfolie aufgenommene Elektrodenanordnung;
eine Fahne (101) ist an dem Körper (10) angeordnet, Fahne (101) elektrisch mit der Elektrodenanordnung verbunden; und
ein erstes Schutzelement (11), das an einem ersten Ende des Körpers (10) angeordnet ist, wobei das erste Ende mit der Fahne (101) versehen ist, ein Teil der Fahne (101) in dem ersten Schutzelement (11) angeordnet ist und ein anderer Teil der Fahne (101) sich aus dem ersten Schutzelement (11) heraus erstreckt,
wobei der Körper (10) der elektrochemischen Vorrichtung (100) ferner eine Vielzahl von Seitenflächen umfasst, die mit dem mit der Fahne (101) versehenen Ende verbunden sind, und
**dadurch gekennzeichnet, dass** das erste Schutzelement (11) ferner einen Teilbereich der Vielzahl von Seitenflächen in mindestens einem Eckbereich des Körpers (10) abdeckt und der Teilbereich direkt mit dem mit der Fahne (101) versehenen Ende an dem Körper (10) verbunden ist.

2. Elektrochemische Vorrichtung (100) nach Anspruch 1, wobei an dem ersten Schutzelement (11) eine brechbare Struktur angeordnet ist und das erste Schutzelement (11) eine obere Versiegelung (102) des Körpers (10) abdeckt.

3. Elektrochemische Vorrichtung (100) nach Anspruch 2, wobei die brechbare Struktur eine Kerbe (113) ist.

4. Elektrochemische Vorrichtung (100) nach Anspruch 1, wobei das erste Schutzelement (11) mindestens die obere Versiegelung (102) des Körpers (10) abdeckt.

5. Elektrochemische Vorrichtung (100) nach Anspruch 1, wobei in dem ersten Schutzelement (11) ein erstes Durchgangsloch (110) vorgesehen ist und sich die Fahne (101) aus dem ersten Durchgangsloch (110) aus dem ersten Schutzelement (11) heraus erstreckt.

6. Elektrochemische Vorrichtung (100) nach Anspruch 1, wobei in dem ersten Schutzelement (11) ein zur Positionierung dienendes zweites Durchgangsloch (111) vorgesehen ist;
die elektrochemische Vorrichtung (100) ferner einen Sensor (105) und einen Draht (106) umfasst, der Sensor (105) mit dem Körper (10) in Kontakt steht und zwischen dem ersten Schutzelement (11) und dem Körper (10) angeordnet ist und der Draht (106) elektrisch mit dem Sensor (105) verbunden ist und aus dem zweiten Durchgangsloch (111) herausragt.

7. Elektrochemische Vorrichtung (100) nach einem der Ansprüche 1 bis 6, wobei die elektrochemische Vorrichtung (100) ferner umfasst: ein zweites Schutzelement (12), das an einem zweiten Ende des Körpers (10) angeordnet ist, und das zweite Ende dem ersten Ende gegenüberliegt.

8. Elektrochemische Vorrichtung (100) nach Anspruch 7, wobei die elektrochemische Vorrichtung (100) ferner umfasst: ein drittes Schutzelement (13), das an einer ersten Oberfläche (103) des Körpers (10) angeordnet ist, und die erste Oberfläche (103) sowohl mit dem ersten Ende als auch mit dem zweiten Ende des Körpers (10) verbunden ist.

9. Elektrochemische Vorrichtung (100) nach Anspruch 8, wobei das dritte Schutzelement (13) umfasst: eine erste Oberfläche (201), eine zweite Oberfläche (202), eine erste Seitenfläche (203) und eine zweite seitliche Oberfläche; die erste Oberfläche (201) der zweiten Oberfläche (202) gegenüberliegt, die erste Seitenfläche (203) der zweiten seitlichen Oberfläche gegenüberliegt;
wobei an der zweiten seitlichen Oberfläche eine an eine Seitenkante des Körpers (10) angepasste Nut (200) vorgesehen ist.

10. Elektrochemische Vorrichtung (100) nach Anspruch 9, wobei das erste Schutzelement (11) und das zweite Schutzelement (12) einstückig ausgebildet sind;
oder
das erste Schutzelement (11), das zweite Schutzelement (12) und das dritte Schutzelement (13) einstückig ausgebildet sind;
oder
das erste Schutzelement (11) und das zweite Schutzelement (12) mit dem Körper (10) zu einem Ganzen integriert sind;
oder
das erste Schutzelement (11), das zweite Schutzelement (12) und das dritte Schutzelement (13) mit dem Körper (10) zu einem Ganzen integriert sind.

11. Elektrochemische Vorrichtung (100) nach Anspruch 1, wobei das erste Schutzelement durch Niederdruck-Spritzgießen gebildet und mit einem Gehäuse des Körpers (10) integriert ist.

12. Elektrochemische Vorrichtung (100) nach Anspruch 2, wobei das erste Schutzelement (11) einen Vorsprung (112) umfasst, der an der Oberseite des ersten Schutzelements (11) ausgebildet ist, wobei der Vorsprung (112) einen Teil der Fahne 101 abdeckt.

13. Batteriepack, umfassend mindestens zwei elektrochemische Vorrichtungen (100) nach einem der Ansprüche 1 bis 12, wobei die mindestens zwei elektrochemischen Vorrichtungen (100) gestapelt sind.

14. Elektrische Vorrichtung, umfassend eine Last und den Batteriepack nach Anspruch 13, wobei die elektrochemische Vorrichtung (100) die Last mit Strom versorgt.

## Revendications

1. Dispositif électrochimique (100), comprenant :
un corps (10) comprend un film d'emballage, un ensemble d'électrodes logé dans le film d'emballage ;
une languette (101) est disposée sur le corps (10), languette (101) connectée électriquement à l'ensemble d'électrodes ; et
un premier protecteur (11) disposé à une première extrémité du corps (10), dans lequel la première extrémité est pourvue de la languette (101), une partie de la languette (101) est disposée dans le premier protecteur (11), et une autre partie de la languette (101) s'étend hors du premier protecteur (11),
dans lequel le corps (10) du dispositif électrochimique (100) comprend en outre une pluralité de faces latérales reliées à l'extrémité pourvue de la languette (101), et
**caractérisé en ce que** le premier protecteur (11) recouvre en outre une région partielle de la pluralité de faces latérales, dans au moins une région d'angle du corps (10), et la région partielle est directement reliée à l'extrémité pourvue de la languette (101) sur le corps (10).

2. Dispositif électrochimique (100) selon la revendication 1, dans lequel une structure frangible est disposée au niveau du premier protecteur (11), et le premier protecteur (11) recouvre un scellement supérieur (102) du corps (10).

3. Dispositif électrochimique (100) selon la revendication 2, dans lequel la structure frangible est une encoche (113).

4. Dispositif électrochimique (100) selon la revendication 1, dans lequel le premier protecteur (11) recouvre au moins le scellement supérieur (102) du corps (10).

5. Dispositif électrochimique (100) selon la revendication 1, dans lequel un premier trou traversant (110) est ménagé dans le premier protecteur (11), et la languette (101) s'étend hors du premier protecteur (11) à partir du premier trou traversant (110).

6. Dispositif électrochimique (100) selon la revendication 1, dans lequel un second trou traversant (111) servant au positionnement est ménagé dans le premier protecteur (11) ;
le dispositif électrochimique (100) comprend en outre un capteur (105) et un fil (106), le capteur (105) est en contact avec le corps (10) et disposé entre le premier protecteur (11) et le corps (10), et le fil (106) est connecté électriquement au capteur (105) et fait saillie par le second trou traversant (111).

7. Dispositif électrochimique (100) selon l'une quelconque des revendications 1 à 6, dans lequel le dispositif électrochimique (100) comprend en outre : un deuxième protecteur (12) disposé à une seconde extrémité du corps (10), et la seconde extrémité est opposée à la première extrémité.

8. Dispositif électrochimique (100) selon la revendication 7, dans lequel le dispositif électrochimique (100) comprend en outre : un troisième protecteur (13) disposé sur une première surface (103) du corps (10), et la première surface (103) est reliée à la fois à la première extrémité et à la seconde extrémité du corps (10).

9. Dispositif électrochimique (100) selon la revendication 8, dans lequel le troisième protecteur (13) comprend : une première surface (201), une seconde surface (202), une première face latérale (203) et une seconde surface latérale ; la première surface (201) est opposée à la seconde surface (202), la première face latérale (203) est opposée à la seconde surface latérale ;
dans lequel une rainure (200) adaptée à un bord latéral du corps (10) est ménagée sur la seconde surface latérale.

10. Dispositif électrochimique (100) selon la revendication 9, dans lequel le premier protecteur (11) et le deuxième protecteur (12) sont formés d'un seul tenant ;
ou,
le premier protecteur (11), le deuxième protecteur (12) et le troisième protecteur (13) sont formés d'un seul tenant ;
ou,
le premier protecteur (11) et le deuxième protecteur (12) sont intégrés au corps (10) pour former un tout ;
ou,
le premier protecteur (11), le deuxième protecteur (12) et le troisième protecteur (13) sont intégrés au corps (10) pour former un tout.

11. Dispositif électrochimique (100) selon la revendication 1, dans lequel le premier protecteur est formé par moulage par injection basse pression et intégré à un boîtier du corps (10).

12. Dispositif électrochimique (100) selon la revendication 2, dans lequel le premier protecteur (11) comprend un bossage (112) formé au sommet du premier protecteur (11), le bossage (112) recouvrant une partie de la languette 101.

13. Bloc-batterie, comprenant au moins deux dispositifs électrochimiques (100) selon l'une quelconque des revendications 1 à 12, dans lequel les au moins deux dispositifs électrochimiques (100) sont empilés.

14. Dispositif électrique, comprenant une charge et le bloc-batterie selon la revendication 13, dans lequel le dispositif électrochimique (100) alimente la charge en énergie.
